(19)

**Europäisches Patentamt**
**European Patent Office**
**Office européen des brevets**

(11) **EP 3 950 337 A1**

(12) **EUROPEAN PATENT APPLICATION**
published in accordance with Art. 153(4) EPC

(43) Date of publication:
**09.02.2022 Bulletin 2022/06**

(21) Application number: **20783402.9**

(22) Date of filing: **27.03.2020**

(51) International Patent Classification (IPC):
**B32B 27/18** (2006.01)   **C08K 5/09** (2006.01)
**C08L 29/04** (2006.01)   **C08L 101/12** (2006.01)
**C08J 5/18** (2006.01)   **C08K 3/10** (2018.01)
**C08J 7/04** (2020.01)

(52) Cooperative Patent Classification (CPC):
**B32B 27/18; C08J 5/18; C08J 7/02; C08J 7/04;**
**C08J 7/048; C08K 3/01; C08K 3/10; C08K 3/18;**
**C08K 5/09; C08K 7/00; C08L 1/00; C08L 29/04;**
**C08L 101/02; C08L 101/12**

(86) International application number:
**PCT/JP2020/014350**

(87) International publication number:
**WO 2020/203903 (08.10.2020 Gazette 2020/41)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.03.2019   JP 2019067446**
**29.03.2019   JP 2019067447**
**30.10.2019   JP 2019197103**
**29.11.2019   JP 2019216942**
**27.12.2019   JP 2019237755**
**27.12.2019   JP 2019237756**

(71) Applicant: **Mitsubishi Chemical Corporation**
**Chiyoda-ku**
**Tokyo 100-8251 (JP)**

(72) Inventors:
• **KOBAYASHI, Ryohei**
**Tokyo 100-8251 (JP)**
• **UCHIDA, Hisao**
**Tokyo 100-8251 (JP)**
• **NAKAJIMA, Takuya**
**Tokyo 100-8251 (JP)**
• **TAKESHITA, Keisuke**
**Tokyo 100-8251 (JP)**
• **KANDA, Taiji**
**Tokyo 100-8251 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **RESIN COMPOSITION, FILM AND MULTILAYER STRUCTURE**

(57)   A resin composition containing a polyvinyl alcohol resin, wherein there are two different components when methylene carbon at 44 to 46 ppm is separated into components according to a $^{13}C$ spin-lattice relaxation time $T_{1C}$, one of the two different components having a relaxation time $T_{1C}$ of not greater than 50 seconds as observed when the resin composition is analyzed through solid-state NMR measurement by placing a 4-mm $\phi$ zirconia rotor filled with the resin composition in a 9.4-T static magnetic field at a $^{1}H$ resonance frequency of 400 MHz and a $^{13}C$ resonance frequency of 100 MHz, and rotating the zirconia rotor at 5,000 Hz at 23°C under magic angle spinning conditions. The resin composition is excellent in gas barrier property, particularly in oxygen barrier property, in a high humidity environment.

**Description**

TECHNICAL FIELD

The present disclosure relates to a resin composition and, more specifically, to a resin composition which can be used for formation of a film having a higher gas barrier property in a high humidity environment.

BACKGROUND ART

Polyvinyl alcohol resins are generally excellent in strength, transparency, and gas barrier property. Therefore, the polyvinyl alcohol resins are formed into films, which are widely used for various packaging materials, particularly, for foods, chemical agents, and the like that need to be protected from degradation due to oxygen.

However, the polyvinyl alcohol resins have a greater number of hydroxyl groups and, hence, are liable to be significantly affected by humidity. Therefore, the polyvinyl alcohol resins are liable to suffer from significant deterioration in gas barrier property in a high humidity environment.

PTL 1, for example, discloses a gas barrier film material for a film having an improved gas barrier property. The gas barrier film material contains poorly-water-soluble inorganic particles having an average particle diameter of not greater than 500 nm, and a water-soluble or water-dispersible polymer compound, wherein the poorly-water-soluble particles are ionic crystal particles prepared by a reaction of an inorganic compound essentially containing at least one selected from the group consisting of aluminum, silicon, zinc, zirconium, silver, and tin, or any of their salts with at least one compound selected from the group consisting of an organic acid, an inorganic acid, and their salts.

PTL 2 discloses a gas barrier layer formation composition, which contains a water-soluble polymer, at least one selected from the group consisting of a metal alkoxide, a hydrolysis product of the metal alkoxide, and tin chloride, and a compound represented by a general formula $(R^1Si(OR^2)_3)_n$ (wherein $R^1$ is an organic functional group, and $R^2$ is $CH_3$, $C_2H_5$ or $C_2H_4OCH_3$).

Further, PTL 3 discloses a gas barrier laminate production method, which includes the steps of forming a coating film containing zinc ions, at least one selected from a metal alkoxide and its hydrolysis product, and a water-soluble polymer on a surface of a substrate film or a laminate including the substrate film; and drying the coating film to form a gas barrier layer on the surface.

RELATED ART DOCUMENTS

PATENT DOCUMENTS

PTL 1: JP-A-2002-338821
PTL 2: JP-A-2016-221864
PTL 3: JP-A-2018-089567

SUMMARY

However, the gas barrier films disclosed in PTL 1 to PTL 3 each have an insufficient gas barrier property in the high humidity environment, requiring further improvement.

In view of the foregoing, the present disclosure provides a resin composition which is excellent in gas barrier property in the high humidity environment, particularly in oxygen barrier property in the high humidity environment.

The inventors of the present disclosure found that a resin composition containing a polyvinyl alcohol resin is excellent in gas barrier property, particularly in oxygen barrier property, in the high humidity environment, if the polyvinyl alcohol resin has an amorphous structure having a suppressed molecular mobility.

The inventors of the present disclosure further found that a resin composition containing a hydrophilic resin and a metal compound is excellent in gas barrier property, particularly in oxygen barrier property, in the high humidity environment, if the second virial coefficient of the resin composition is greater than the second virial coefficient of the hydrophilic resin.

According to a first aspect of the present disclosure, a resin composition is provided, which contains a polyvinyl alcohol resin, wherein there are two different components when methylene carbon at 44 to 46 ppm is separated into components according to a $^{13}C$ spin-lattice relaxation time $T_{1C}$, one of the two different components having a relaxation time $T_{1C}$ of not greater than 50 seconds as observed when the resin composition is analyzed through solid-state NMR measurement by placing a 4-mm $\phi$ zirconia rotor filled with the resin composition in a 9.4-T static magnetic field (at a

$^1$H resonance frequency of 400 MHz and a $^{13}$C resonance frequency of 100 MHz), and rotating the zirconia rotor at 5,000 Hz at 23°C under magic angle spinning conditions.

According to a second aspect of the present disclosure, a resin composition is provided, which contains a hydrophilic resin (X) and a metal compound, and satisfies the following expression (1):

$$\Delta A_2 = A_2 - A_{2,0} > 0 \quad ....(1)$$

wherein $A_2$ is the second virial coefficient of the resin composition and $A_{2,0}$ is the second virial coefficient of the hydrophilic resin (X) contained in the resin composition as determined by performing static light scattering measurement with the use of hexafluoroisopropanol as a solvent, and $\Delta A_2$ is a value calculated from $A_2 - A_{2,0}$.

According to a third aspect of the present disclosure, a resin composition is provided, which contains a polyvinyl alcohol resin, and has an oxygen permeability (cc·3 $\mu$m/m²·day·atm) satisfying the following expression (2) as measured in an environment at 23°C at 80%RH, when being formed into a film:

$$\text{Oxygen permeability (cc·3 } \mu\text{m/m}^2\text{·day·atm)} \leq 80 \quad ....(2)$$

According to a fourth aspect of the present disclosure, a film is provided, which comprises the resin composition according to the first aspect, the resin composition according to the second aspect, or the resin composition according to the third aspect. According to a fifth aspect of the present disclosure, a multilayer structure is provided, which includes at least one layer formed of the film according to the fourth aspect.

The resin composition of the first aspect contains the polyvinyl alcohol resin. There are two different components when methylene carbon at 44 to 46 ppm is separated into components according to a $^{13}$C spin-lattice relaxation time $T_{1C}$, and one of the two different components has a relaxation time $T_{1C}$ of not greater than 50 seconds as observed when the resin composition is analyzed by the solid-state NMR measurement in the aforementioned manner. Therefore, the film formed from the resin composition is excellent in gas barrier property, particularly in oxygen barrier property, in the high humidity environment.

The component of $T_{1C} \leq 50$ seconds is attributable to an amorphous structure of the polyvinyl alcohol resin. A polyvinyl alcohol resin for which a greater number of components attributable to the amorphous structure are observed is generally liable to have a higher molecular mobility and, therefore, tends to be poorer in gas barrier property. The resin composition of the first aspect is characterized in that the number of the components attributable to the amorphous structure is reduced to one by suppressing the molecular mobility of the amorphous structure of a polyvinyl alcohol resin for which two or more components attributable to the amorphous structure are generally observed. On the other hand, a structure corresponding to a component of $T_{1C} > 50$ seconds is present in all resin compositions containing the polyvinyl alcohol resin, and belongs to a crystalline structure of the polyvinyl alcohol resin.

The resin composition of the second aspect contains the hydrophilic resin (X) and the metal compound, and satisfies the following expression (1):

$$\Delta A_2 = A_2 - A_{2,0} > 0 \quad ....(1)$$

wherein $A_2$ is the second virial coefficient of the resin composition and $A_{2,0}$ is the second virial coefficient of the hydrophilic resin (X) contained in the resin composition as determined by performing the static light scattering measurement with the use of hexafluoroisopropanol as the solvent, and $\Delta A_2$ is the value calculated from $A_2 - A_{2,0}$. Therefore, the film formed from the resin composition is excellent in gas barrier property, particularly in oxygen barrier property, in the high humidity environment.

The resin composition of the third aspect contains the polyvinyl alcohol resin, and has an oxygen permeability (cc·3 $\mu$m/m²·day·atm) satisfying the following expression (2) as measured in the environment at 23°C at 80%RH, when being formed into a film:

$$\text{Oxygen permeability (cc·3 } \mu\text{m/m}^2\text{·day·atm)} \leq 80 \quad ....(2)$$

Therefore, the film formed from the resin composition is excellent in gas barrier property, particularly in oxygen barrier property, in the high humidity environment.

BRIEF DESCRIPTION OF DRAWING

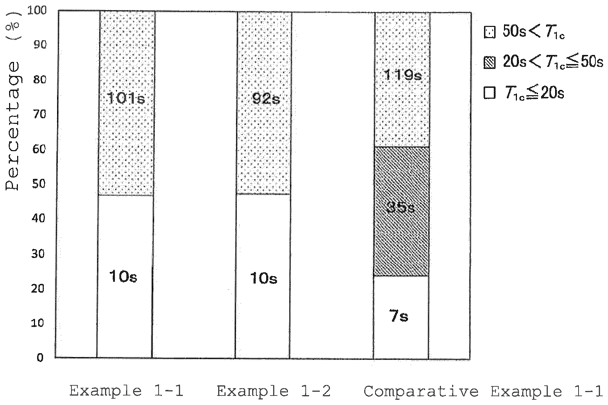

The FIGURE illustrates the percentages of respective components observed when resin compositions of Examples 1-1 and 1-2, and Comparative Example 1-1 were each analyzed by solid-state NMR measurement.

DESCRIPTION OF EMBODIMENTS

Embodiments of the present disclosure will hereinafter be described specifically. However, it should be understood that the disclosure be not limited to these embodiments.

A resin composition according to one embodiment of the present disclosure contains a polyvinyl alcohol resin. A resin composition according to another embodiment of the present disclosure contains a hydrophilic resin (X) and a metal compound. The components of the resin compositions will hereinafter be described.

<Hydrophilic Resin (X)>

Specific examples of the hydrophilic resin (X) include water-soluble resins such as vinyl alcohol resin, polysaccharide, acrylic resin, and polyether resin. These may be used alone or in combination as the hydrophilic resin (X) .

The hydrophilic resin (X) preferably has the following properties when being formed into a film.

Where the film is formed from the hydrophilic resin (X) as having a thickness of 30 μm and immersed still in water at 25°C for two hours, the film preferably has an area change ratio of not less than 105%. The area change ratio may be calculated from the following expression:

$$\text{Area change ratio (\%)} = \frac{\text{Film area after immersion}}{\text{Film area before immersion}} \times 100$$

The specific examples of the hydrophilic resin (X) will hereinafter be described in detail.

[Vinyl Alcohol Resin]

Resins known as ethylene-vinyl alcohol copolymer resins (having an ethylene content of 20 to 60 mol %) are generally excluded as the vinyl alcohol resin. A typical example of the vinyl alcohol resin is polyvinyl alcohol (hereinafter referred to as "PVA") resin.

[PVA Resin]

In general, the PVA resin is preferably an unmodified PVA resin, but may be a modified PVA resin.

The unmodified PVA resin can be typically prepared by polymerizing a vinyl ester monomer, and then saponifying the resulting polymer.

The modified PVA resin can be prepared by saponifying a polymer of the vinyl ester monomer and some other unsaturated monomer, or by post-modifying the unmodified PVA resin.

Examples of the vinyl ester monomer include aliphatic vinyl esters such as vinyl formate, vinyl acetate, vinyl propionate, vinyl valerate, vinyl butyrate, vinyl isobutyrate, vinyl pivalate, vinyl caprate, vinyl laurate, vinyl stearate, vinyl versatate, and vinyl trifluoroacetate, and aromatic vinyl esters such as vinyl benzoate. The aliphatic vinyl esters preferably have a carbon number of 3 to 20, more preferably 4 to 10, particularly preferably 4 to 7. Vinyl acetate is especially preferred. These vinyl esters are typically each used alone or, as required, a plurality of vinyl esters may be selected from these vinyl esters to be used in combination.

Examples of the other unsaturated monomer include: olefins such as ethylene, propylene, isobutylene, α-octene, α-dodecene, and α-octadecene; unsaturated acids such as acrylic acid, methacrylic acid, crotonic acid, maleic acid, maleic anhydride, and itaconic acid, salts of these unsaturated acids, and monoalkyl and dialkyl esters of these unsaturated acids; nitriles such as acrylonitrile and methacrylonitrile; amides such as acrylamide and methacrylamide; olefin sulfonic acids such as ethylenesulfonic acid, allylsulfonic acid, and methallylsulfonic acid, and salts of these olefin sulfonic acids; alkyl vinyl ethers; N-acrylamide methyl trimethylammonium chloride, allyl trimethylammonium chloride, dimethylallyl vinyl ketone, N-vinylpyrrolidone, vinyl chloride, and vinylidene chloride; polyoxyalkylene (meth)allyl ethers such as polyoxyethylene (meth)allyl ether and polyoxypropylene (meth)allyl ether; polyoxyalkylene (meth)acrylates such as polyoxyethylene (meth)acrylate and polyoxypropylene (meth)acrylate; polyoxyalkylene (meth)acrylamides such as polyoxyethylene (meth)acrylamide and polyoxypropylene (meth)acrylamide; polyoxyethylene (1-(meth)acrylamide-1,1-dimethylpropyl) ester, polyoxyethylene vinyl ether, and polyoxypropylene vinyl ether; and polyoxyethylene allylamine, polyoxypropylene allylamine, polyoxyethylene vinylamine, and polyoxypropylene vinylamine. These may be used alone or in combination. The term "(meth)allyl" means allyl or methallyl, and the term "(meth)acrylate" means acrylate or methacrylate. The term "(meth)acryl" means acryl or methacryl.

The PVA resin may be prepared by a known polymerization method, a known saponification method, and a known post-modification method.

The amount of the other unsaturated monomer to be introduced and the modification degree for the post modification are properly determined according to the type of the monomer, and are each typically not greater than 15 mol %, particularly not greater than 10 mol %. If the introduced amount and the modification degree are excessively great, the PVA resin tends to have a reduced crystallinity, thereby reducing the gas barrier property of a film formed from the resin composition.

The PVA resin typically has an average saponification degree of 70 to 100 mol %, preferably 80 to 100 mol %, particularly preferably 85 to 100 mol %, more preferably 90 to 99.99 mol %. If the average saponification degree is lower than 70 mol %, the oxygen permeability tends to be increased in the high humidity environment. The average saponification degree is measured in conformity with JIS K6726.

The PVA resin typically has an average polymerization degree of 100 to 4,000, preferably 200 to 3,000, particularly preferably 250 to 2,500. If the average polymerization degree is excessively low, mechanical properties such as film strength tend to be poorer. If the average polymerization degree is excessively high, it will be difficult to solubilize the PVA resin in water and hence to handle the PVA resin. The average polymerization degree is measured in conformity with JIS K6726.

Two or more PVA resins which are different in modification species, modification degree, average saponification degree, and average polymerization degree may be used in combination as the PVA resin.

Of the aforementioned PVA resins, the unmodified PVA resin and the modified PVA resin are preferred, and the unmodified PVA resin is most preferred for an excellent gas barrier property, particularly for an excellent oxygen barrier property, in the high humidity environment.

[Polysaccharide]

Examples of the polysaccharide include starch, and cellulose.

Examples of the starch include natural starches such as corn starch and potato starch, and modified starches such as etherified starch, esterified starch, crosslinked starch, grafted starch, baked dextrin, enzyme-modified dextrin, gelatinized starch, and oxidized starch.

Examples of the cellulose include carboxymethyl cellulose, methyl cellulose, ethyl cellulose, hydroxymethyl cellulose, hydroxypropylmethyl cellulose, hydroxyethyl cellulose, hydroxyethylmethyl cellulose, hydroxypropyl cellulose, nitrocellulose, and cationic cellulose, and metal salts such as sodium salts of these celluloses.

[Acrylic Resin]

Examples of the acrylic resin include polyacrylamide, polyacrylic acid, and metal salts such as sodium salts of the polyacrylic acid.

[Polyether Resin]

Examples of the polyether resin include polyethylene glycol and polypropylene glycol.

For the excellent gas barrier property, particularly for the excellent oxygen barrier property, in the high humidity environment, the vinyl alcohol resin and the polysaccharide are preferred as the hydrophilic resin (X). Particularly, the PVA resin and the cellulose are preferred, and the unmodified PVA resin is most preferred.

The hydrophilic resin (X) is preferably a main component of the resin composition in at least one embodiment of the present disclosure, and the proportion of the hydrophilic resin (X) is typically not less than 80 wt.%, preferably not less than 90 wt.%, particularly preferably not less than 95 wt.%, based on the overall amount of the resin composition. The upper limit of the proportion of the hydrophilic resin (X) is typically 99.99 wt.%.

Particularly, the PVA resin is preferably the main component of the resin composition of the present disclosure, and the proportion of the PVA resin is typically not less than 80 wt.%, preferably not less than 90 wt.%, particularly preferably not less than 95 wt.%, based on the overall amount of the resin composition. The upper limit of the proportion of the PVA resin is typically 99.99 wt.%.

[Metal Compound]

The resin composition according to at least one embodiment of the present disclosure preferably contains the metal compound. The metal compound preferably has a lamellar structure including layers of a specific structural unit spaced a specific interfacial distance from each other. For example, the metal compound has a lamellar structure including layers of a metal complex spaced a specific interfacial distance from each other.

Exemplary metal species of the metal compound include Na, K, Ca, Mg, Si, Al, Ti, Cr, Mn, Fe, Co, Ni, Cu, and Zn. These metal species may be contained alone or in combination. Particularly, Zn is preferred for the excellent gas barrier property, particularly for the excellent oxygen barrier property, in the high humidity environment.

The metal compound is prepared from a compound containing at least one metal selected from the group consisting of Na, K, Ca, Mg, Si, Al, Ti, Cr, Mn, Fe, Co, Ni, Cu, and Zn (hereinafter referred to as "metal-containing material compound") by a method to be described later.

More specifically, the structural unit of the metal compound is a structural unit containing the metal, a hydroxy ligand, and an anionic ligand other than the hydroxy ligand, preferably a structural unit containing the metal, the hydroxy ligand, and the anionic ligand other than the hydroxy ligand and represented by the following chemical formula (3):

$$M_a(OH)_b A^{n-}_{(2a-b)/n} \qquad (3)$$

wherein M is the metal species, A is the anionic ligand having a valence of n- and excluding the hydroxy ligand and O (oxo ligand), n is an integer not less than 1, and a and b are numbers greater than zero and satisfy an expression $a/b$ = 0.1 to 10.

In the above chemical formula (3), examples of the metal species M include Na, K, Ca, Mg, Si, Al, Ti, Cr, Mn, Fe, Co, Ni, Cu, and Zn, which may be used alone or in combination. For the excellent gas barrier property, particularly for the excellent oxygen barrier property, in the high humidity environment, Al, Si, Mg, Ni, Co, and Zn are preferred, and Ni, Co, and Zn are particularly preferred. Especially, Zn is preferred.

In the above chemical formula (3), examples of the anionic ligand A include RO (alkoxy ligand), ROCO (carboxylate ligand), $CO_3$, $NO_3$, $SO_3$, $PO_4$, $BO_3$, F, Br, and Cl (wherein R is an alkyl chain which is generally represented by a chemical formula $C_mH_{2m+1}$ (m = 1 to 20) and may have a functional group such as OH group as long as the effects of the present disclosure are not impaired). However, O (oxo ligand) is excluded as the anionic ligand A. These anionic ligands may be contained alone or in combination. From the viewpoint of interaction between the metal compound and the PVA resin, $NO_3$, Cl, RO, and ROCO are preferred, and ROCO is particularly preferred. Especially, $CH_3OCO$ is preferred.

The metal compound may contain a water molecule.

The metal compound preferably has a major peak at $2\theta$ = 2 to 15°, more preferably $2\theta$ = 2 to 9°, particularly preferably at $2\theta$ = 3 to 8°, in the X-ray diffraction pattern as measured by wide angle X-ray diffraction using $CuK\alpha$ radiation.

The wide angle X-ray diffraction is performed under the following conditions:

[Measurement Conditions]

- Apparatus: D8 DISCOVER (available from Bruker Japan Co., Ltd.)
- Detector: Two-dimensional detector VANTEC-500 (available from Bruker Japan Co., Ltd.)
- Voltage: 50 kV
- Electric current: 100 mA
- Camera length: 100 mm
- Measurement method: Reflection method
- Integration period: 30 minutes
- Wavelength: $CuK\alpha$ radiation (with $K\alpha1$ and $K\alpha2$ not separated)
- Detector position: $2\theta$ = 10°
- X-ray incident angle: $\theta$ = 0.3°
- Conditions for one-dimensional integration in $2\theta$ direction: $2\theta$ = 0 to 35°, Azimuthal angle (chi) = -95 to -85°
- One-dimensional integration in azimuthal direction: Azimuthal angle (chi) = -180 to 0°

The one-dimensional integration in the azimuthal direction is performed with a 1.0° range, so that a peak having the highest diffraction intensity appears at $2\theta$ = 2 to 15°. At this time, where a peak is observed in an azimuthal angle range of -180 to 0°, it is determined that a diffraction peak is observed at $2\theta$ = 2 to 15°. Where a diffraction peak is observed at $2\theta$ = 6.8°, for example, the one-dimensional integration in the azimuthal direction is performed for $2\theta$ = 6.0 to 7.0°. At this time, if a peak is observed in an azimuthal angle range of -180 to 0°, it may be determined that a diffraction peak is observed at $2\theta$ = 2 to 15°.

The interlayer distance (the distance between the layers) of the metal compound is preferably 0.01 to 50 nm, more preferably 0.1 to 30 nm, to ensure proper interaction between molecules of the hydrophilic resin and water molecules. The interlayer distance of the metal compound can be calculated from the Bragg's equation based on the diffraction position of a highest-intensity peak in the range of $2\theta = 2$ to $15°$ as analyzed by the X-ray diffraction.

The lamellar structural unit of the separated layers of the metal compound preferably has a molecular weight of 100 to 10,000, particularly preferably 200 to 2,000, to ensure the proper interaction with the hydrophilic resin molecules.

The lamellar structural unit is preferably hydrophilic to ensure the proper interaction with the hydrophilic resin molecules.

It is preferred that the lamellar structural unit is not decomposed even if being allowed to keep still in an environment at 20°C at 90%RH for 1,000 hours.

A specific example of the metal compound is a metal-containing lamellar compound such as containing Zn as the metal species. For the excellent gas barrier property, particularly for the excellent oxygen barrier property, in the high humidity environment, the layered basic zinc compound is preferred, and a layered basic zinc compound represented by a chemical formula $Zn_5 (OH)_8(CH_3CO_2)_2 \cdot 2H_2O$ is more preferred.

In the resin composition according to at least one embodiment of the present disclosure, the metal compound and the PVA resin interact with each other, so that the polarity of the PVA resin is increased. This supposedly ensures the excellent gas barrier property, particularly the excellent oxygen barrier property, in the high humidity environment.

The amount of the metal compound contained in the resin composition according to at least one embodiment of the present disclosure is typically 0.01 to 20 wt.%, preferably 0.01 to 10 wt.%, more preferably 0.1 to 8 wt.%, particularly preferably 0.2 to 4 wt.%, on a metal basis based on the amount of the resin composition. The amount of the metal compound contained in the resin composition of the present disclosure is typically 0.01 to 20 wt.%, preferably 0.01 to 10 wt.%, more preferably 0.1 to 8 wt.%, particularly preferably 0.2 to 4 wt.%, on a metal basis based on 100 parts by weight of the PVA resin. If the amount of the metal compound is excessively small, the gas barrier property, particularly the oxygen barrier property, in the high humidity environment tends to be poorer. If the amount of the metal compound is excessively great, the resin composition tends to be whitened to have a lower transparency when being formed into a film.

Where the resin composition contains a plurality of metal compounds having different metal species, the amount of the metal compound is defined as the total amount of the metal compounds contained in the resin composition.

The amount of the metal compound can be determined by a standard addition method using ICP-MS.

The metal compound can be prepared, for example, by a method (I) in which the metal-containing material compound is allowed to react in the presence of a base, or a method (II) in which the metal-containing material compound is allowed to react by heating.

The metal-containing material compound to be used in the aforementioned methods may be, for example, an organic acid metal salt or an inorganic metal salt.

Examples of an organic acid moiety of the organic acid metal salt include monovalent carboxylic acids such as acetic acid, divalent carboxylic acids such as succinic acid, oxalic acid, and tartaric acid, and trivalent and higher-valent carboxylic acids such as citric acid and ethylenediaminetetraacetic acid, which may be used alone or in combination. The organic acid metal salt may be a hydrate or may be an anhydride.

For the excellent gas barrier property, particularly for the excellent oxygen barrier property, in the high humidity environment, metal salts of the monovalent carboxylic acids are preferred, and metal salts of acetic acid are particularly preferred as the organic acid metal salt. Especially, zinc acetate or its hydrate is preferred.

Examples of the inorganic metal salt include fluorides, chlorides, bromides, iodides, and oxo acid salts of the metals, which may be used alone or in combination. The inorganic metal salt may be a hydrate or may be an anhydride.

For the excellent gas barrier property, particularly for the excellent oxygen barrier property, in the high humidity environment, the chlorides and the oxo acid salts of the metals are preferred, and zinc chloride and zinc nitrate, and their hydrates are particularly preferred as the inorganic metal salt.

The metal compound can be prepared with the use of the metal-containing material compound, for example, by the method (I) in which the metal-containing material compound is allowed to react in the presence of the base, or the method (II) in which the metal-containing material compound is allowed to react by heating.

These methods will hereinafter be described in detail.

[Method (I)]

In the method (I), the metal-containing material compound is allowed to react in the presence of the base.

Examples of the base to be used in the method (I) include hydroxides of alkali metals and alkali earth metals. Of these, the alkali metal hydroxides are preferred because of their higher reactivity with the metal-containing material compound, and sodium hydroxide is particularly preferred.

The metal-containing material compound is typically mixed with the base in a solution thereof, and allowed to react with the base in the solution.

The method of mixing the metal-containing material compound with the base is not particularly limited, but examples of the method include a method in which a solution prepared by dissolving the metal-containing material compound in a solvent and a solution prepared by dissolving the base in a solvent are mixed together, and a method in which a slurry prepared by dispersing the metal-containing material compound in a solvent and a solution prepared by dissolving the base in a solvent are mixed together. Particularly, the method in which the solution of the metal-containing material compound and the solution of the base are mixed together is preferred from the viewpoint of reaction efficiency. Where the organic acid metal salt is used as the metal-containing material compound, a method in which a solution prepared by dissolving the organic acid metal salt in a solvent is added to and mixed with the solution of the base is preferred. Where the inorganic metal salt is used as the metal-containing material compound, a method in which the solution of the base is added to and mixed with a solution prepared by dissolving the inorganic metal salt in a solvent is preferred.

The solvents in which the metal-containing material compound and the base are dissolved are not particularly limited, as long as the metal-containing material compound and the base can be dissolved therein. Examples of the solvents include water, and C1 to C5 lower alcohols such as methanol, ethanol, 1-propanol, 2-propanol, 1-butanol, and 2-butanol, which may be used alone or in combination. Of these, water is preferred because it ensures easier post treatment.

The concentration of the metal-containing material compound in the solution prepared by dissolving the metal-containing material compound in the solvent is typically 0.5 to 3 mol/L, preferably 1 to 2 mol/L.

The concentration of the base in the solution prepared by dissolving the base in the solvent is typically 0.01 to 100 mol/L, preferably 0.1 to 30 mol/L, particularly preferably 1 to 10 mol/L.

If the concentration of the metal-containing material compound and the concentration of the base are much lower than the aforementioned ranges, the reaction tends to insufficiently proceed. If the concentration of the metal-containing material compound and the concentration of the base are much higher than the aforementioned ranges, a side reaction tends to occur.

The molar ratio between the metal-containing material compound and the base ((metal-containing material compound):(base)) is typically 0.5:2 to 2:0.5, preferably 0.8:1.5 to 1.5:0.8, particularly preferably 0.9:1.2 to 1:1. If the molar ratio falls outside the aforementioned ranges, the reaction tends to insufficiently proceed.

The reaction between the metal-containing material compound and the base is typically allowed to proceed at a pH of 4 to 9, preferably 5 to 8. If the pH is much lower than the aforementioned ranges, the reaction tends to insufficiently proceed. If the pH is much higher than the aforementioned ranges, the metal compound generated by the reaction tends to be decomposed. The pH is controlled by adjusting the amount of the solution of the metal-containing material compound and the amount of the solution of the base to be used.

The reaction is typically allowed to proceed at a temperature of 15°C to 60°C, preferably 20°C to 40°C. If the reaction temperature is excessively low, the reaction tends to insufficiently proceed. If the reaction temperature is excessively high, the metal-containing material compound tends to be thermally decomposed, making it impossible to provide the intended metal compound.

The reaction period is typically 0.5 to 5 hours, preferably 1 to 3 hours. The reaction pressure may be an ordinary pressure.

The metal compound prepared through the reaction is in the form of precipitate. The metal compound thus prepared may be used as it is, but is preferably refined by washing, grinding and/or the like before use.


[Method (II)]

In the method (II), the metal-containing material compound is allowed to react by heating.

In the method (II), a solution prepared by dissolving the metal-containing material compound in a solvent is typically heated while being stirred.

Examples of the solvent in which the metal-containing material compound is dissolved include those described above as the solvents to be used in the method (I). Particularly, water and the alcohols are preferred, and water is especially preferred.

For the reaction, the solution may be typically heated to a temperature of 20°C to 100°C, preferably 50°C to 95°C, particularly preferably 70°C to 90°C. If the reaction temperature is excessively low, the reaction tends to insufficiently proceed. If the reaction temperature is excessively high, the metal-containing material compound tends to be thermally decomposed, making it impossible to provide the intended metal compound.

The reaction period is typically 0.1 to 100 hours, preferably 0.5 to 30 hours, particularly preferably 1 to 10 hours. The reaction pressure may be an ordinary pressure.

The metal compound prepared through the reaction is in the form of precipitate. The metal compound thus prepared may be used as it is, or may be refined by washing, grinding and/or the like before use.

The term "metal compound" generally means, for example, a metal salt, a metal oxide, a metal complex, a metal, an alloy or the like. In contrast, the metal compound prepared by any of the methods described above is the metal compound having the lamellar structure including the layers of the specific structural unit spaced the specific interfacial distance from each other. Where molecules of the PVA resin and water molecules are present around the metal compound, therefore, the layers of the metal compound are separated from each other, and the resulting minute lamellar structural unit interacts with the PVA resin on a molecular basis. This supposedly ensures the excellent gas barrier property, particularly the excellent oxygen barrier property.

[Other Ingredients]

Additives to be generally blended in PVA resin compositions may be added to the resin composition according to at least one embodiment of the present disclosure, as long as the effects of the present disclosure are not impaired. Examples of the additives include heat stabilizer, antioxidant, antistatic agent, colorant, UV absorber, lubricant, plasticizer, light stabilizer, surfactant, antibacterial agent, desiccant, antiblocking agent, flame retarder, crosslinking agent, curing agent, foaming agent, crystal nucleating agent, antifogging agent, biodegradation additive, silane coupling agent, and oxygen absorber, which may be used alone or in combination.

The resin composition according to at least one embodiment of the present disclosure is preferably prepared, for example, by mixing the metal compound and some other optional ingredients with the PVA resin.

Alternatively, the resin composition according to at least one embodiment of the present disclosure may be prepared, for example, by blending the hydrophilic resin, the metal-containing material compound, and the solvent, and heating and stirring the resulting mixture. In this method, the metal-containing material compound reacts in the solvent to be changed in structure, whereby the metal compound is generated.

The amount of the metal-containing material compound is typically 0.01 to 20 parts by weight, preferably 0.01 to 10 parts by weight, more preferably 0.1 to 8 parts by weight, particularly preferably 0.2 to 5 parts by weight, on a metal basis based on 100 parts by weight of the hydrophilic resin.

The solvent is not particularly limited, as long as the hydrophilic resin can be dissolved therein. Water is typically used as the solvent. In order to reduce a period required for drying a film formed from the resin composition, a C1 to C5 lower alcohol such as methanol, ethanol, propanol, n-butanol or isopropanol may be used, as long as the hydrophilic resin can be dissolved therein.

The amount of the solvent is typically 100 to 9,900 parts by weight, preferably 400 to 1,900 parts by weight, based on 100 parts by weight of the hydrophilic resin.

The blending order of the hydrophilic resin, the metal-containing material compound, and the solvent is not particularly limited, but these ingredients may be blended simultaneously or sequentially. From the viewpoint of the reactivity, it is particularly preferred to blend the hydrophilic resin and the metal-containing material compound in the solvent.

The heating temperature is typically 20°C to 100°C, preferably 40°C to 95°C, particularly preferably 80°C to 95°C. If the heating temperature is excessively low, the hydrophilic resin tends to be insufficiently dissolved in the solvent. If the heating temperature is excessively high, the metal-containing material compound tends to be decomposed.

The reaction period is typically 0.5 to 5 hours, preferably 1 to 4 hours, particularly preferably 2 to 3 hours. If the reaction period is excessively short, the reaction tends to insufficiently proceed. If the reaction period is excessively long, it will be impossible to improve the reaction yield, resulting in poorer economy.

The pressure during the heating may be an ordinary pressure.

<Resin Composition>

The resin composition according to at least one embodiment of the present disclosure contains the PVA resin, wherein there are two different components when methylene carbon at 44 to 46 ppm is separated into components according to a $^{13}$C spin-lattice relaxation time $T_{1C}$, one of the two different components having a relaxation time $T_{1C}$ of not greater than 50 seconds as observed when the resin composition is analyzed by solid-state NMR measurement in the following manner.

For the solid-state NMR measurement, a 4-mm $\phi$ zirconia rotor is filled with the resin composition, and placed in a 9.4-T static magnetic field. The form of the resin composition to be used for the solid-state NMR measurement is not particularly limited, as long as the resin composition is in a solid state. A film formed from the resin composition as will be described later is preferably used for the solid-state NMR measurement.

[Conditions for Solid-State NMR Measurement]

Measurement temperature: 23°C
Rotation speed of sample tube: 5,000 Hz
Observed nucleus/Decoupled nucleus: $^{13}$C (at 100.7 MHz)/ $^{1}$H (at 400.3 MHz)
Pulse sequence: Inversion Recovery

$^{1}$H 90° pulse: 4.2 μs × 1.6 dB (54 W/300 W)
$^{13}$C 90° pulse: 4.2 μs × 1.6 dB (103 W/500 W)

Contact time: 350 μs
Delay period $\tau$: 0.05 to 1,000 s
Pulse delay: 60 s
Decoupling sequence: TPPM15
Decoupling power: 60 kHz (54 W/300 W)
Cumulative number: 64

The delay period $\tau$ (s) is plotted as abscissa, while the peak height at 44 to 46 ppm (corresponding to methylene carbon which is a main chain of the PVA resin) in a solid-state NMR spectrum is plotted as ordinate. The plots are curve-fitted based on the following expression (4), whereby the components are separated from each other.

$$M(\tau) = \sum_{n=1}^{3} M(\infty)\left\{1 - p \times exp\left(-\frac{\tau}{T_{1C}}\right)\right\} \quad \cdot \cdot \cdot \quad (4)$$

wherein p is a factor of 2 to 4.
The components determined based on the above expression (4) indicate the crystalline/amorphous state of the resin composition. Specifically, a component of 50 seconds < $T_{1C}$ indicates a crystalline structure, and a component of $T_{1C} \leq 50$ seconds indicates an amorphous structure. That is, the resin composition according to at least one embodiment of the present disclosure has a single type of amorphous structure. Of the component of $T_{1C} \leq 50$ seconds, a component of 20 seconds < $T_{1C} \leq 50$ seconds indicates a more mobile amorphous structure, while a component of $T_{1C} \leq 20$ seconds indicates a less mobile amorphous structure. Particularly, the amorphous structure of the resin composition preferably includes only the less mobile amorphous structure as indicated by the component of $T_{1C} \leq 20$ seconds for the excellent gas barrier property, particularly for the excellent oxygen barrier property, in the high humidity environment.
In general, the gas barrier property of a crystalline polymer such as the PVA resin is highly dependent on the amorphous structure. In the present disclosure, therefore, the molecular mobility of the amorphous structure is suppressed, thereby ensuring the excellent gas barrier property, particularly the excellent oxygen barrier property, in the high humidity environment.
For the resin composition according to at least one embodiment of the present disclosure, the percentage of the component of $T_{1C} \leq 50$ seconds is preferably not less than 20%, more preferably not less than 25%, particularly preferably not less than 30%, of all the components for the excellent gas barrier property, particularly for the excellent oxygen barrier property, in the high humidity environment. The upper limit of the percentage of the component of $T_{1C} \leq 50$ is typically 50%.
In the resin composition according to at least one embodiment of the present disclosure, the molecular mobility of the amorphous structure of the PVA resin is suppressed, whereby the above expression (2) and the requirement for the components are satisfied. Therefore, the resin composition is excellent in gas barrier property, particularly in oxygen barrier property, in the high humidity environment. The resin composition can be imparted with such properties, for example, by allowing the resin composition to keep still in the high humidity environment, particularly preferably, by allowing the film containing the resin composition to keep still in the high humidity environment.
The resin composition according to at least one embodiment of the present disclosure contains the hydrophilic resin (X) and the metal compound, and satisfies the following expression (1):

$$\Delta A_2 = A_2 - A_{2,0} > 0 \quad ....(1)$$

wherein $A_2$ is the second virial coefficient of the resin composition and $A_{2,0}$ is the second virial coefficient of the hydrophilic resin (X) contained in the resin composition as determined by performing static light scattering measurement with the use of hexafluoroisopropanol as a solvent, and $\Delta A_2$ is a value calculated from $A_2$ - $A_{2,0}$.

The second virial coefficients $A_2$, $A_{2,0}$ are determined in the following manner.

Five measurement solutions are prepared as having different solid concentrations within a range of 0.1 to 1 mg/mL by dissolving the resin composition in hexafluoroisopropanol as a solvent, and the static light scattering measurement is performed on the measurement solutions at a temperature of 25°C. Then, the second virial coefficient $A_2$ and the weight average molecular weight $Mw_b$ of the resin composition are determined based on the resulting Zimm plot.

Further, the second virial coefficient $A_x$ and the weight average molecular weight $Mw_a$ of the hydrophilic resin (X) are determined in the same manner.

The hydrophilic resin (X) is the same hydrophilic resin (X) as contained in the resin composition, i.e., the hydrophilic resin yet to be blended with the metal compound in the resin composition.

The resin composition according to at least one embodiment of the present disclosure contains the hydrophilic resin (X) and the metal compound. Therefore, the weight average molecular weight of the hydrophilic resin (X) in the resin composition is different from the apparent weight average molecular weight ($Mw_a$) of the hydrophilic resin (X). Accordingly, the second virial coefficient $A_x$ determined through the static light scattering measurement of the hydrophilic resin (X) cannot be employed as the second virial coefficient $A_{2,0}$ of the hydrophilic resin (X) in the resin composition. Therefore, the second virial coefficient $A_{2,0}$ of the hydrophilic resin (X) in the resin composition is determined in the following manner. 1) A constant q is determined from the following expression (5):

$$q = A_x/Mw_a{}^v \ldots (5)$$

$A_x$: The second virial coefficient determined through the static light scattering measurement of the hydrophilic resin (X).

$Mw_a$: The weight average molecular weight determined through the static light scattering measurement of the hydrophilic resin (X).

$v$: -0.25

Here, $v$ in a good solvent is generally -0.25 and, therefore, $v$ = -0.25 is employed for the calculation. 2) The second virial coefficient $A_{2,0}$ of the hydrophilic resin (X) in the resin composition is determined from the following expression (6) by using the constant q thus obtained and the weight average molecular weight $Mw_b$ determined through the static light scattering measurement of the resin composition. In the following expression (6), $v$ = -0.25 is used as in the above expression (5).

$$A_{2,0} = q \times Mw_b{}^v \ldots (6)$$

In the resin composition according to at least one embodiment of the present disclosure, the value $\Delta A_2$ needs to be greater than zero ($\Delta A_2 > 0$) for the excellent gas barrier property, particularly for the excellent oxygen barrier property, in the high humidity environment. The value $\Delta A_2$ is preferably $\Delta A_2 > 0.00005$, more preferably $\Delta A_2 > 0.0001$, particularly preferably $\Delta A_2 > 0.0005$. The upper limit of the value $\Delta A_2$ is typically 0.01, preferably 0.1.

The second virial coefficient shows the affinity of the polymer chains for the solvent. Since the second virial coefficient $A_2$ of the resin composition according to at least one embodiment of the present disclosure is greater than the second virial coefficient $A_{2,0}$ of the hydrophilic resin (X) in the resin composition, the polymer chains in the resin composition is more affinitive for hexafluoroisopropanol than the hydrophilic resin (X). That is, the resin composition according to according to at least one embodiment of the present disclosure, which is highly affinitive for hexafluoroisopropanol (highly polar solvent), has a higher polarity than the hydrophilic resin (X). Therefore, the resin composition according to at least one embodiment of the present disclosure is excellent in gas barrier property, particularly in oxygen barrier property, in the high humidity environment.

The resin composition according to at least one embodiment of the present disclosure contains the PVA resin, and has an oxygen permeability (cc·3 $\mu$m/m$^2$·day·atm) satisfying the following expression (2) as measured in an environment at 23°C at 80%RH, when being formed into a film:

$$\text{Oxygen permeability (cc·3 } \mu\text{m/m}^2\text{·day·atm)} \leq 80 \ldots (2)$$

The oxygen permeability is preferably not greater than 80 cc·3 $\mu$m/m$^2$·day·atm, more preferably not greater than 70 cc·3 $\mu$m/m$^2$·day·atm, still more preferably not greater than 55 cc·3 $\mu$m/m$^2$·day·atm, more preferably not greater than 40 cc·3 $\mu$m/m$^2$·day·atm, still more preferably not greater than 35 cc·3 $\mu$m/m$^2$·day·atm, more preferably not greater than 30 cc·3 $\mu$m/m$^2$·day·atm, still more preferably not greater than 25 cc·3 $\mu$m/m$^2$·day·atm, more preferably not greater than 20 cc·3 $\mu$m/m$^2$·day·atm, particularly preferably not greater than 10 cc·3 $\mu$m/m$^2$·day·atm, as measured in an environment at 23°C at 80%RH. The lower limit of the oxygen permeability is typically 0 cc·3 $\mu$m/m$^2$·day·atm. The oxygen permeability can be measured by means of an oxygen permeability measurement apparatus.

<Film Containing Resin Composition>

The film containing the resin composition of the present disclosure is formed from a composition containing the resin composition described above, preferably from the resin composition.

Exemplary film forming methods include a method using a solution or a dispersion (coating liquid) of the resin composition of the present disclosure, and a method in which pellets of the composition containing the resin composition of the present disclosure are melt-formed by means of an extruder. Particularly, the method using the solution or the dispersion (coating liquid) of the resin composition is preferred. Where the coating liquid is to be used, the coating liquid typically has a solid concentration of 0.5 to 30 wt.%, preferably 5 to 20 wt.%.

Exemplary coating liquid preparation methods include a method in which all the ingredients are simultaneously fed to and mixed together in a solvent, and a method in which a solution is prepared by dissolving some of the ingredients in a solvent, and the other ingredients are added to and mixed with the solution. Particularly, a method in which a solution is prepared by dissolving the PVA resin in a solvent, and the other ingredients are added to and mixed with the solution is preferred for working efficiency.

In the metal compound preparation methods described above, the PVA resin is preferably dissolved in the solvent during the reaction of the metal-containing material compound. For the working efficiency, the PVA resin is preferably dissolved in the solvent in the metal compound preparation method (II).

Usable examples of the solvent include those described for the preparation of the metal compound. Particularly, water is preferred.

Examples of the film forming methods include known methods such as melt extrusion method, endless belt method, drum method, coating method, and other casting methods. Of these, the casting methods are preferred, and the coating method is particularly preferred.

Examples of the coating method include known methods such as bar coater method, roll coating method, die coating method, Gravure coating method, comma coating method, and screen printing method.

After the coating, the resulting coating film is dried, for example, at 60°C to 105°C for 0.5 to 10 minutes with heating. Thus, the film of the resin composition can be produced. As required, the film may be stretched by uniaxial stretching method or biaxial stretching method.

The film may be provided in the form of a single layer structure film or may be provided in the form of a multilayer structure. The multilayer structure preferably includes at least one layer of the film. The multilayer structure may include a plurality of such films laminated together, or may include such a film laminated on a base film of some other base resin.

The film containing the resin composition of the present disclosure typically has a thickness of 1 to 200 $\mu$m, preferably 1 to 100 $\mu$m, particularly preferably 1 to 50 $\mu$m. Where the formed film is provided in the form of the multilayer structure, the film thickness is the total thickness of all the films each containing the resin composition.

Examples of the base resin include: (unmodified) polyolefin resins including polyethylene resins such as linear low-density polyethylenes, low-density polyethylenes, very-low-density polyethylenes, medium-density polyethylenes, high-density polyethylenes, ethylenepropylene (block and random) copolymers, and ethylene-$\alpha$-olefin (C4 to C20 $\alpha$-olefin) copolymers, polypropylene resins such as polypropylenes and propylene-$\alpha$-olefin (C4 to C20 $\alpha$-olefin) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of the aforementioned polyolefin resins with an unsaturated carboxylic acid or an unsaturated carboxylic acid ester; and ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrenes, vinyl ester resins, polyester elastomers, polyurethane elastomers, polystyrene elastomers, halogenated polyolefins such as chlorinated polyethylenes and chlorinated polypropylenes, and aromatic and aliphatic polyketones. These may be used alone or in combination. A base film formed of any of these base resins may be subjected to a surface treatment such as corona treatment.

The film containing the resin composition according to at least one embodiment of the present disclosure is allowed to keep still in the high humidity environment, whereby the film satisfies the above expression (2) and the requirement for the components and, hence, is imparted with an excellent gas barrier property, particularly an excellent oxygen barrier property, in the high humidity environment. There is no clear principle for this effect, but it is supposed that, by allowing the film to keep still in the high humidity environment, the molecules of the PVA resin are plasticized, and the metal compound dispersed in the film interacts with the PVA resin or is locally present in the surface of the film.

In the present disclosure, the high humidity environment means an environment at 20 $\pm$ 5°C at 90 $\pm$ 10%RH.

The period during which the film is allowed to keep still is typically not shorter than 70 hours, preferably not shorter than 300 hours, more preferably not shorter than 600 hours. The upper limit of the keep-still period is typically 1,000 hours.

The film containing the resin composition of the present disclosure is highly transparent, and the transparency of the film is significantly excellent as compared with a film containing an inorganic lamellar compound or a filler. Specifically, the film containing the resin composition of the present disclosure preferably has a haze of not greater than 1%, more preferably not greater than 0.6%, still more preferably not greater than 0.3%, particularly preferably not greater than 0.2%. The haze is a HAZE value measured in conformity with JIS K7361-1. For example, ten test samples each having a size of 50 mm × 50 mm are cut out of the film, and the haze values of the ten test samples are measured by a haze meter (NDH-4000 available from Nippon Denshoku Industries Co., Ltd.) and averaged. The average haze value is defined as the haze (%).

The resin composition of the present disclosure and the film containing the resin composition are useful for packaging materials, and can be advantageously used for packaging materials, particularly, for foods, pharmaceutical products, and the like.

EXAMPLES

The embodiments of the present disclosure will hereinafter be described more specifically by way of examples thereof. However, it should be understood that the present disclosure be not limited to the examples within the scope of the present disclosure.

In the following examples, "parts" and "%" are based on weight, unless otherwise specified.

<<First Examples>>

Prior to implementation of First Examples, the following PVA resin was prepared.

[PVA Resin]

• PVA (1): Unmodified PVA resin having an average polymerization degree of 300 and an average saponification degree of 99 mol %

<Example 1-1>

First, 100 parts of the PVA (1) and 0.3 parts of $Zn(CH_3COO)_2 \cdot 2H_2O$ on a metal basis as the metal-containing material compound were added to 900 parts of water, and the resulting mixture was heated to 90°C and stirred for 3 hours. Thus, the resin composition (coating liquid) was prepared. The coating liquid thus prepared was applied on a corona-treated surface of a corona-treated PET substrate having a thickness of 38 μm with the use of a wire bar #18, and dried at 80°C for 5 minutes. Thus, a double layer film including a 3-μm thick resin composition film formed on the PET substrate was produced. The resulting film was allowed to keep still under a humidity condition at 23°C at 80%RH for 200 hours. Thus, a film of Example 1-1 was produced.

<Example 1-2>

A film was produced in substantially the same manner as in Example 1-1, except that the amount of $Zn(CH_3COO)_2 \cdot 2H_2O$ was 1 part on a metal basis based on 100 parts of the PVA (1). The resulting film was allowed to keep still under the same humidity condition as in Example 1-1, whereby a film of Example 1-2 was produced.

<Comparative Example 1-1>

A film was produced in substantially the same manner as in Example 1-1, except that $Zn(CH_3COO)_2 \cdot 2H_2O$ was not added. The resulting film was allowed to keep still under the same humidity condition as in Example 1-1, whereby a film of Comparative Example 1-1 was produced.

[Wide Angle X-Ray Diffraction (XRD) Measurement]

The films of Examples 1-1 and 1-2, and Comparative Example 1-1 produced in the aforementioned manner were each analyzed by performing the wide angle X-ray diffraction measurement under the following conditions:

[Measurement Conditions]

Apparatus: D8 DISCOVER (available from Bruker Japan Co., Ltd.)
Voltage: 50 kV
Electric current: 100 mA
Camera length: 150 mm
Measurement method: Reflection method
Integration period: 20 minutes

As the result of the measurement, major peaks were detected at $2\theta = 6.8°$, 13.5°, 20.2° in diffraction spectra of the films of Examples 1-1 and 1-2. These peak positions matched with those for the layered basic zinc compound described in Inorg. Chem. 2013, 52, 95-102. Therefore, the metal compound contained in the films of Examples 1-1 and 1-2 was identified as the layered basic zinc compound $Zn_5(OH)_8(CH_3CO_2)_2 \cdot 2H_2O$.

Based on the diffraction position of a highest-intensity peak observed at $2\theta = 6.8°$ when the films of Examples 1-1 and 1-2 were analyzed by the wide angle X-ray diffraction, the interlayer distance of the layered basic zinc compound was calculated from the Bragg equation. As a result, the layered basic zinc compound $(Zn_5(OH)_8(CH_3CO_2)_2 \cdot 2H_2O)$ had an interlayer distance of 1.3 nm.

In a diffraction spectrum of the film of Comparative Example 1-1, in contrast, no major peaks were detected at the same diffraction positions as those detected in the diffraction spectra of the films of Examples 1-1 and 1-2.

[Oxygen Barrier Property]

Only the resin composition film was separated from each of the films of Examples 1-1 and 1-2, and Comparative Example 1-1 produced in the aforementioned manner, and the oxygen permeability of the separated film was measured at 23°C at 80%RH by means of an oxygen permeability measurement apparatus (OX-TRAN100A available from MOCON Corporation). The results are shown below in Table 1.

<Solid-State NMR Measurement>

The resin composition film was separated from each of the double layer films of Examples 1-1 and 1-2, and Comparative Example 1-1, and a sample having a size of 1 to 3 mm square was cut out of the separated film by scissors. After the sample was put in a 4 mm $\phi$ zirconia rotor, the $^{13}$C nucleus spin-lattice relaxation time $T_{1C}$ was measured by placing the zirconia rotor in a 9.4-T static magnetic field (at a $^1$H resonance frequency of 400 MHz and a $^{13}$C resonance frequency of 100 MHz), and rotating the zirconia rotor at 5,000 Hz at 23°C under magic angle spinning conditions. Based on the resulting spectrum, the delay period $\tau$ (s) was plotted as abscissa, and the peak height at 70 ppm corresponding to the main chain methylene carbon of the PVA resin was plotted as ordinate. The plots were curve-fitted based on the following expression (4) with the use of Microsoft Excel solver, whereby components were separated from each other.

$$M(\tau) = \sum_{n=1}^{3} M(\infty)\left\{1 - p \times \exp\left(-\frac{\tau}{T_{1C}}\right)\right\} \quad \cdot \cdot \cdot \quad (4)$$

wherein p is a factor of 2 to 4.

The components for each of Examples 1-1 and 1-2, and Comparative Example 1-1 determined based on the expression (4) are shown below in Table 1 and in the FIGURE.

Table 1

| | Example 1-1 | Example 1-2 | Comparative Example 1-1 |
|---|---|---|---|
| Polyvinyl alcohol resin (parts) | PVA (1) 100 | | |
| Amount of Zn (CH₃COO)₂·2H₂O on metal basis (parts) *1 | 0.3 | 1 | - |
| Components separated according to ¹³C spin-lattice relaxation time | | | |

(continued)

|  |  | Example 1-1 | Example 1-2 | Comparative Example 1-1 |
|---|---|---|---|---|
| Number of components |  | 2 | 2 | 3 |
| components of $T_{1C} \leq 50$ | Number | 1 | 1 | 2 |
|  | Percentages (%) of components | 47.0% | 47.5% | 37.1%, 24.1% |
| Oxygen barrier property (cc·3 $\mu$m/m² ·day·atm) |  | 6 | 5 | 100 |
| *1: Amount based on 100 parts by weight of polyvinyl alcohol resin. |  |  |  |  |

As can be understood from Table 1, the resin composition films of Examples 1-1 and 1-2 are excellent in oxygen barrier property with an oxygen permeability of not greater than 80 cc·3 $\mu$m/m2·day·atm. The resin film of Comparative Example 1-1 is poorer in oxygen barrier property with an oxygen permeability of 100 cc·3 $\mu$m/m2·day·atm.

As can be understood from Table 1 and the FIGURE, the resin composition films of Examples 1-1 and 1-2 for which two components were observed and only one of the two components had a relaxation time $T_{1C}$ of not greater than 50 seconds as measured by the solid-state NMR are excellent in oxygen barrier property in the high humidity environment. On the other hand, the resin film of Comparative Example 1-1 for which three components were observed and two of the three components each had a relaxation time $T_{1C}$ of not greater than 50 seconds is poorer in oxygen barrier property in the high humidity environment.

<<Second Examples>>

Prior to implementation of Second Examples, the following hydrophilic resin (X) was prepared.

[Hydrophilic Resin (X)]

• PVA (2): Unmodified PVA resin having an average polymerization degree of 300 and an average saponification degree of 99 mol %

<Example 2-1>

First, 100 parts of the PVA (2) and 0.3 parts of zinc acetate on a metal basis were added to 900 parts of water, and dissolved in the water with heating to 90°C with stirring. After the resulting mixture was maintained at 90°C and stirred for 3 hours, the mixture was cooled to a room temperature (23°C). Thus, a solution containing the hydrophilic resin (X) and the metal compound was prepared.

The solution thus prepared was applied on a corona-treated PET film having a thickness of 38 $\mu$m by means of a bar coater, and dried at 120°C for 5 minutes in a hot air dryer. Then, the resulting coating film was allowed to keep still in an environment at 23°C at 80%RH for 72 hours. Thus, a resin composition film (having a thickness of 3 $\mu$m) of Example 2-1 was produced.

The second virial coefficients of the resin composition film thus produced and the PVA (2) were determined by the following static light scattering measurement.

[Static Light Scattering Measurement of Resin Composition and Hydrophilic Resin (X)]

The resin composition film produced in the aforementioned manner was separated from the PET film. Five measurement solutions for each of the resin composition film and the PVA (2) were prepared as having different concentrations within a range of 0.1 to 1 mg/mL by dissolving the resin composition film or the PVA (2) in hexafluoroisopropanol. Then, the measurement solutions were each filtered three times with the use of a PTFE membrane filter having a pore diameter of 0.2 $\mu$m.

Thereafter, the resulting filtrates were analyzed by the static light scattering measurement by means of a static light scattering photometer (SLS-6500 available from Otsuka Electronics Co., Ltd.) The static light scattering measurement was performed at 25°C at an angle interval of 10° within a scattering angle range of $\theta$ = 20 to 150°. Device calibration was performed with the use of toluene. Values determined by a differential refractive index meter (DRM-3000 available from Otsuka Electronics Co., Ltd.) with the use of the measurement solutions for the static light scattering measurement were used as the refractive index/concentration increments (dn/dc) of the resin composition and the hydrophilic resin (X) required for determination of the weight average molecular weights and the second virial coefficients. The measurement temperature was 25°C.

[Static Light Scattering Analysis]

Zimm plot was prepared based on scattering intensities determined by the static light scattering measurement, and the weight average molecular weight ($Mw_b$) and the second virial coefficient $A_2$ of the resin composition were determined by a usual method. Further, the second virial coefficient $A_{2,0}$ of the PVA (2) was determined by the aforementioned method based on the weight average molecular weight ($Mw_a$) and the second virial coefficient $A_x$ determined by the static light scattering measurement of the PVA (2).

As a result, the second virial coefficient $A_2$ of the resin composition was 0.006532, and the second virial coefficient $A_{2,0}$ of the PVA (2) was 0.004822. A difference $\Delta A_2 = A_2 - A_{2,0}$ between the second virial coefficient $A_2$ of the resin composition and the second virial coefficient $A_{2,0}$ of the PVA (2) was 0.001710.

[Oxygen Barrier Property]

The resin composition film of Example 2-1 was separated from the PET film, and the oxygen permeability of the resulting resin composition film was measured in an environment at 23°C at 80%RH by means of an oxygen permeability measurement apparatus (OX-TRAN100A available from MOCON Corporation). The results are shown below in Table 2.

<Example 2-2>

A resin composition film of Example 2-2 was produced in substantially the same manner as in Example 2-1, except that zinc acetate was added in an amount of 1 part on a metal basis. Thereafter, the second virial coefficient $A_2$ of the resin composition film thus produced was determined in the same manner as in Example 2-1. A difference $\Delta A_2$ between the second virial coefficient $A_2$ of the resin composition and the second virial coefficient $A_{2,0}$ of the PVA (2) was 0.005030. Further, the resin composition film of Example 2-2 was evaluated for oxygen barrier property in the same manner as in Example 2-1. The results are shown below in Table 2.

<Example 2-3>

A resin composition film of Example 2-3 was produced in substantially the same manner as in Example 2-1, except that zinc acetate was added in an amount of 5 parts on a metal basis. Thereafter, the second virial coefficient $A_2$ of the resin composition film thus produced was determined in the same manner as in Example 2-1. A difference $\Delta A_2$ between the second virial coefficient $A_2$ of the resin composition and the second virial coefficient $A_{2,0}$ of the PVA (2) was 0.008179. Further, the resin composition film of Example 2-3 was evaluated for oxygen barrier property in the same manner as in Example 2-1. The results are shown below in Table 2.

<Comparative Example 2-1>

A resin (PVA (2)) film of Comparative Example 2-1 was produced in substantially the same manner as in Example 2-1, except that zinc acetate was not added. A value $\Delta A_2$ was 0. Further, the resin film of Comparative Example 2-1 was evaluated for oxygen barrier property in the same manner as in Example 2-1. The results are shown below in Table 2.

<Comparative Example 2-2>

A resin composition film of Comparative Example 2-2 was produced in substantially the same manner as in Example 2-1, except that zinc oxide was added in an amount of 1 part on a metal basis instead of zinc acetate. Thereafter, the second virial coefficient $A_2$ of the resin composition film thus produced was determined in the same manner as in Example 2-1. A difference $\Delta A_2$ between the second virial coefficient $A_2$ of the resin composition and the second virial coefficient $A_{2,0}$ of the PVA (2) was -0.004817. Further, the resin composition film of Comparative Example 2-2 was evaluated for oxygen barrier property in the same manner as in Example 2-1. The results are shown below in Table 2.

<Comparative Example 2-3>

A resin composition film of Comparative Example 2-3 was produced in substantially the same manner as in Example 2-1, except that zinc chloride was added in an amount of 1 part on a metal basis instead of zinc acetate. Since the resin composition film of Comparative Example 2-3 was not dissolved in hexafluoroisopropanol, it was impossible to determine the second virial coefficient $A_2$. Further, the resin composition film of Comparative Example 2-3 was evaluated for oxygen barrier property in the same manner as in Example 2-1. The results are shown below in Table 2.

Table 2

| | | Example 2-1 | Example 2-2 | Example 2-3 | Comparative Example 2-1 | Comparative Example 2-2 | Comparative Example 2-3 |
|---|---|---|---|---|---|---|---|
| Hydrophilic resin (X) (parts) | | PVA (2) 100 | | | | | |
| Metal compound | | | | | | | |
| | Metal-containing material compound | Zinc acetate | Zinc acetate | Zinc acetate | - | Zinc oxide | Zinc chloride |
| | Added amount (parts)[*1] on metal basis | 0.3 | 1 | 5 | - | 1 | 1 |
| $\triangle A_2$ | | 0.001710 | 0.005030 | 0.008179 | 0 | -0.004817 | Impossible to measure |
| Oxygen barrier property (cc·3μm/m²·day·atm) | | 3 | 5 | 6 | 100 | 103 | 298 |
| *1: Added amount based on 100 parts by weight of hydrophilic resin (X). | | | | | | | |

As indicated above in Table 2, the resin composition films of Examples 2-1 to 2-3 each containing the hydrophilic resin (X) and the metal compound and having a $\Delta A_2$ of greater than 0 were excellent in oxygen barrier property in the high humidity environment.

In contrast, the resin film of Comparative Example 2-1 not containing the metal compound and the resin composition film of Comparative Example 2-2 having a $\Delta A_2$ of not greater than 0 were poorer in oxygen barrier property.

Further, the resin composition film of Comparative Example 2-3 was not dissolved in hexafluoroisopropanol supposedly because of production of a three-dimensionally crosslinked reaction product, making it impossible to determine the value $\Delta A_2$. The resin composition film of Comparative Example 2-3 was poorer in oxygen barrier property than those of Comparative Examples 2-1 and 2-2.

While specific forms of the embodiments of the present disclosure have been shown in the aforementioned examples, the examples are merely illustrative but not limitative. It is contemplated that various modifications apparent to those skilled in the art could be made within the scope of the disclosure.

The resin compositions of the present disclosure are excellent in gas barrier property, particularly in oxygen barrier property, in the high humidity environment. Therefore, the resin compositions of the present disclosure are useful for packaging materials, and can be advantageously used for packaging materials, particularly, for foods, pharmaceutical products, and the like.

## Claims

1. A resin composition, comprising a polyvinyl alcohol resin, wherein there are two different components when methylene carbon at 44 to 46 ppm is separated into components according to a $^{13}$C spin-lattice relaxation time $T_{1c}$, one of the two different components having a relaxation time $T_{1C}$ of not greater than 50 seconds as observed when the resin composition is analyzed through solid-state NMR measurement by placing a 4-mm $\phi$ zirconia rotor filled with the resin composition in a 9.4-T static magnetic field at a $^1$H resonance frequency of 400 MHz and a $^{13}$C resonance frequency of 100 MHz, and rotating the zirconia rotor at 5,000 Hz at 23°C under magic angle spinning conditions.

2. The resin composition according to claim 1, wherein not less than 20% of all the two different components has the relaxation time $T_{1C}$ of not greater than 50 seconds.

3. A resin composition comprising a hydrophilic resin (X) and a metal compound, and satisfying the following expression (1):

$$\Delta A_2 = A_2 - A_{2,0} > 0 \quad (1)$$

wherein:

$A_2$ is a second virial coefficient of the resin composition,
$A_{2,0}$ is a second virial coefficient of the hydrophilic resin (X) contained in the resin composition as determined by static light scattering measurement with hexafluoroisopropanol as a solvent, and
$\Delta A_2$ is a value calculated from $A_2 - A_{2,0}$.

4. A resin composition comprising a polyvinyl alcohol resin, and having an oxygen permeability (cc·3 $\mu$m/m$^2$·day·atm) satisfying the following expression (2) as measured in an environment at 23°C at 80%RH, when being formed into a film:

$$\text{Oxygen permeability (cc·3 } \mu\text{m/m}^2\text{·day·atm)} \leq 80 \quad (2).$$

5. A film comprising the resin composition according to any one of claims 1 to 4.

6. A multilayer structure comprising a plurality of layers, wherein at least one of the plurality of layers comprises the film according to claim 5.

## INTERNATIONAL SEARCH REPORT

| | International application No. |
|---|---|
| | PCT/JP2020/014350 |

**A. CLASSIFICATION OF SUBJECT MATTER**
Int.Cl. B32B27/18(2006.01)i, C08K5/09(2006.01)i, C08L29/04(2006.01)i, C08L101/12(2006.01)i, C08J5/18(2006.01)i, C08K3/10(2018.01)i, C08J7/04(2020.01)i
FI: C08L101/12, C08L29/04A, B32B27/18Z, C08K3/10, C08K5/09, C08J7/04Z, C08J5/18CEX, C08L29/04Z
According to International Patent Classification (IPC) or to both national classification and IPC

**B. FIELDS SEARCHED**

Minimum documentation searched (classification system followed by classification symbols)
Int.Cl. B32B27/18, C08K5/09, C08L29/04, C08L101/12, C08J5/18, C08K3/10, C08J7/04

Documentation searched other than minimum documentation to the extent that such documents are included in the fields searched
Published examined utility model applications of Japan          1922-1996
Published unexamined utility model applications of Japan        1971-2020
Registered utility model specifications of Japan                1996-2020
Published registered utility model applications of Japan        1994-2020

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2001-226553 A (THE NIPPON SYNTHETIC CHEMICAL INDUSTRY | 1-2, 4-6 |
| Y | CO., LTD.) 21.08.2001 (2001-08-21), claims, paragraph [0001], examples 1-7 | 1-6 |
| X | WO 2010/016595 A1 (THE NIPPON SYNTHETIC CHEMICAL | 3, 5-6 |
| Y | INDUSTRY CO., LTD.) 11.02.2010 (2010-02-11), claims, paragraphs [0030]-[0040], examples 1-8 | 1-6 |
| X | JP 2016-121335 A (THE NIPPON SYNTHETIC CHEMICAL INDUSTRY | 3, 5-6 |
| Y | CO., LTD.) 07.07.2016 (2016-07-07), claims, paragraphs [0047]-[0061], [0070], examples 1, 2 | 1-6 |
| X | WO 2017/110844 A1 (THE NIPPON SYNTHETIC CHEMICAL | 3, 5-6 |
| Y | INDUSTRY CO., LTD.) 29.06.2017 (2017-06-29), claims, paragraphs [0021]-[0024], [0076]-[0083], example 1 | 1-6 |

☐ Further documents are listed in the continuation of Box C.          ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03.06.2020 | 16.06.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2020/014350 |

```
JP 2001-226553 A    21.08.2001    (Family: none)

WO 2010/016595 A1  11.02.2010    US 2011/0135950 A1
                                 claims, paragraphs [0058]-[0077],
                                 examples 1-8
                                 CN 102216392 A
                                 EP 2322578 A1
                                 EP 2845881 A1
                                 JP 2010-59418 A

JP 2016-121335 A   07.07.2016    (Family: none)

WO 2017/110844 A1  29.06.2017    US 2018/0355146 A1
                                 claims, paragraphs [0023]-[0028],
                                 [0089]-[0096], example 1
                                 CN 108368319 A
                                 EP 3395891 A1
```

Form PCT/ISA/210 (patent family annex) (January 2015)

**EP 3 950 337 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002338821 A
- JP 2016221864 A
- JP 2018089567 A

**Non-patent literature cited in the description**

- *Inorg. Chem.,* 2013, vol. 52, 95-102